# EUROPEAN PATENT APPLICATION

(11) **EP 4 502 036 A1**
(43) Date of publication of application: **05.02.2025**
(21) Application number: 22933578.1
(22) Date of filing: 03.08.2022
(51) Int. Cl.: C08L 21/00, C08G 18/69, C08G 18/76, C08K 3/013

(54) **THERMALLY CONDUCTIVE POLYMER COMPOSITION, THERMALLY CONDUCTIVE POLYMER COMPOSITION-FORMING MATERIAL, AND THERMALLY CONDUCTIVE POLYMER**

(30) Priority: 24.03.2022 JP 2022048513
(71) Applicant: Mitsubishi Materials Corporation, Tokyo 100-8117 (JP)
(72) Inventor: IIDA Shintaro, Amagasaki-shi, Hyogo 660-0856 (JP); ASHIDA Keiko, Amagasaki-shi, Hyogo 660-0856 (JP)
(74) Representative: Hoffmann Eitle
(86) International application number: PCT/JP2022/029740
(87) International publication number: WO 2023/181445

(57) **Abstract**

The thermally conductive polymer composition includes: a liquid rubber having two or more hydroxyl groups in one molecule; a solvent having one or more hydroxyl groups per molecule; a curing agent having two or more functional groups capable of reacting with both the hydroxyl groups of the liquid rubber and the hydroxyl groups of the solvent in one molecule; and a filler, wherein a compression modulus of a cured thermally conductive polymer at room temperature is 4.5N/mm² or more and 5.5N/mm² or less, the cured thermally conductive polymer being obtained after mixing the thermally conductive polymer composition and then allowing the thermally conductive polymer composition that is mixed to stand in an atmosphere at 25°C for 24 hours or more.

## Description

### TECHNICAL FIELD

The present invention relates to a thermally conductive polymer composition, a material for forming the thermally conductive polymer composition, and a thermally conductive polymer.

Priority is claimed on Japanese Patent Application No. 2022-048513, filed March 24, 2022, the content of which is incorporated herein by reference.

### BACKGROUND ART

Heat transfer materials that are provided between a heat generating body and a heat dissipating member and transmit heat are known in various forms, such as grease type, gap filler type, and sheet type. By using these heat transfer materials, for example, heat generated by a heat generating body can be efficiently dissipated from a heat dissipating member such as a metal case or a heat sink. By providing such a heat transfer material between a heat generating body and a heat dissipating member, the thermal resistance between the heat generating body and the heat dissipating member can be reduced.

In recent years, as various electronic devices have become more highly integrated and perform better, there is a demand for structures with improved heat dissipation properties so that the heat generated by the operation of components (heat generating elements) can be efficiently dissipated to the outside. For this reason, there is a demand for heat transfer materials that can further reduce the thermal resistance between the heating element and the heat dissipating member.

In order to reduce the thermal resistance between a heat generating body and a heat dissipation member, it is possible to increase the thermal conductivity of the heat transfer material itself or to increase the adhesion between the heat transfer material and the heat generating body or heat dissipation member that is in contact with the heat transfer material, thereby reducing the thermal resistance (interface thermal resistance) that occurs at the interface between them.

Conventionally, a common heat transfer material is one in which a highly thermally conductive filler such as alumina is filled in a silicone resin or the like (see, for example, Patent Document 1).

Also, in order to reduce the thermal resistance occurring at the interfaces between the heat transfer material and each component in contact with it, heat transfer materials are known that have improved adhesion to the surfaces of each component, for example, by reducing the hardness (see, for example, Patent Document 2).

Furthermore, in order to reduce the thermal resistance at the interface between the heat transfer material and each component in contact with it, a two-component curing gap filler that can be cured by mixing multiple highly fluid fluids and a putty-like heat transfer material are also known (see, for example, Patent Documents 3 and 4).

### CITATION LIST

### PATENT DOCUMENTS

Patent Document 1: Japanese Unexamined Patent Application, First Publication No. 2005-006428 A
Patent Document 2: Japanese Unexamined Patent Application, First Publication No. 2019-011423 A
Patent Document 3: Japanese Unexamined Patent Application, First Publication No. 2020-050701 A
Patent Document 4: Japanese Unexamined Patent Application, First Publication No. 2020-157554 A

### SUMMARY OF INVENTION

### TECHNICAL PROBLEM

However, in all of the heat transfer materials disclosed in Patent Documents 1 to 4, the hardness increases as the amount of filler added is increased in order to increase the thermal conductivity, making it difficult to make the heat transfer material conform to the surface shape of each component and adhere closely without any gaps.

On the other hand, it is possible to improve the adhesion between the heat generating body and the heat dissipating member by performing a surface treatment to enhance the adhesion on the surface of the heat generating body or the heat dissipating member, but there is a problem that the surface treatment increases the number of manufacturing steps and the manufacturing cost. In addition, if the heat transfer material is placed in a high-temperature environment, the effect of improving the adhesion by the surface treatment may decrease.

The present invention has been made in view of the above background, and aims to provide a thermally conductive polymer composition having high thermal conductivity, low viscosity, high shape conformity, and high workability without the need to remove the solvent during curing, a material for forming the thermally conductive polymer composition for forming this thermally conductive polymer composition, and a thermally conductive polymer obtained by curing the thermally conductive polymer composition. Shape conformity refers to the property of being able to deform along the shape of the adhesive surface and bond without gaps.

### SOLUTION TO PROBLEM

The inventors focused on the amount of urethane bonds derived from the liquid rubber contained in the heat transfer material, and found that by increasing this amount of urethane bonds, it is possible to improve the adhesion of the heat transfer material in a high-temperature environment and after it has been left in a high-temperature environment for a long period of time. That is, when the amount of liquid rubber or curing agent is small, the liquid rubber does not easily form a network, but by increasing the amount of liquid rubber or curing agent, the liquid rubber forms a urethane bond network after curing, the heat transfer material becomes tough, and cohesive failure is suppressed, thereby improving adhesion.

An aspect of the present invention is a thermally conductive polymer composition including: a liquid rubber having two or more hydroxyl groups in one molecule; a solvent having one or more hydroxyl groups per molecule; a curing agent having two or more functional groups capable of reacting with both the hydroxyl groups of the liquid rubber and the hydroxyl groups of the solvent in one molecule; and a filler, wherein a compression modulus of a cured thermally conductive polymer at room temperature is 4.5N/mm² or more and 5.5N/mm² or less, the cured thermally conductive polymer being obtained after mixing the thermally conductive polymer composition and then allowing the thermally conductive polymer composition that is mixed to stand in an atmosphere at 25°C for 24 hours or more.

According to the thermally conductive polymer composition of the present invention, it is possible to obtain a thermally conductive polymer composition which has high thermal conductivity after curing, low viscosity, high shape conformity, and high workability since it does not require removal of the solvent during curing.

In the thermally conductive polymer composition according to the present invention, the filler may have a thermal conductivity of 10 W/(m-K) or more.

In the thermally conductive polymer composition according to the present invention, the liquid rubber may include at least one of polybutadiene, polyisoprene, and polyolefin having a plurality of hydroxyl groups.

In the thermally conductive polymer composition according to the present invention, the solvent may include at least one of ethylene glycol, n-butyl carbitol, glycerin, polyethylene glycol monomethyl ether, butyl glycol, propylene glycol, ethylene glycol, and methyl tetraglycol.

In the thermally conductive polymer composition according to the present invention, the curing agent may be an isocyanate compound.

The thermally conductive polymer composition according to the present invention, may further include a tackifier.

Other aspect of the present invention is a material for forming the thermally conductive polymer composition according to any one of above-described aspects, including: a liquid A containing the liquid rubber and the solvent; and a liquid B containing the curing agent, wherein at least one of the liquid A and the liquid B further contain the filler.

Other aspect of the present invention is a thermally conductive polymer obtained by curing the thermally conductive polymer composition according to any one of above-described aspects, wherein the thermally conductive polymer includes 0.17 mol/2000 cc or more of a urethane bond derived from the liquid rubber.

In the thermally conductive polymer according to the present invention, a terminal group of the thermally conductive polymer may be -[(C2H4-O)m-CnH2n+1], m and n being any natural number.

In the thermally conductive polymer according to the present invention, a thermal conductivity of the thermally conductive polymer may be 1.5 W/(m·K) or more.

### ADVANTAGEOUS EFFECTS OF INVENTION

According to the present invention, it is possible to provide a thermally conductive polymer composition which has high thermal conductivity after curing, low viscosity, high shape conformity, and high workability without the need to remove the solvent during curing; a material for forming the thermally conductive polymer composition for forming the thermally conductive polymer composition; and a thermally conductive polymer obtained by curing the thermally conductive polymer composition.

### BRIEF DESCRIPTION OF DRAWINGS

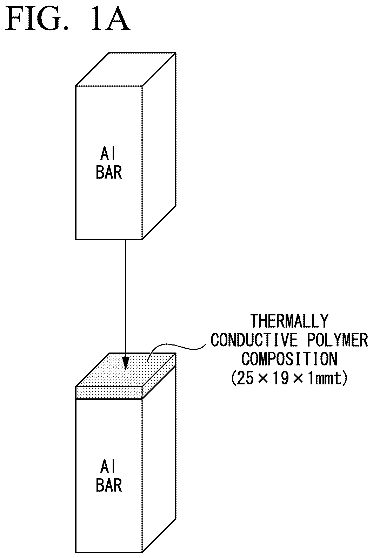

FIG. 1A is a perspective view showing details of a tensile test in a verification example.

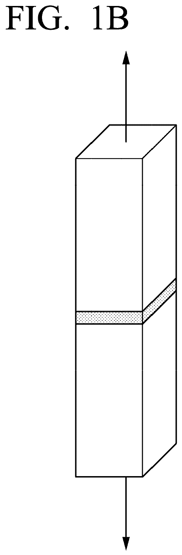

FIG. 1B is a perspective view showing details of a tensile test in a verification example.

### DESCRIPTION OF EMBODIMENTS

Hereinafter, a thermally conductive polymer composition, a material for forming the thermally conductive polymer composition, and a thermally conductive polymer according to embodiments of the present invention will be described with reference to the drawings. The following embodiments are specifically described to better understand the gist of the invention, and do not limit the present invention unless otherwise specified.

### (Thermal Conductive Polymer Composition, Thermally Conductive Polymer)

The thermally conductive polymer composition of the present embodiment is cured to form a thermally conductive polymer, and contains a liquid rubber, a solvent, a curing agent, and a filler. The thermally conductive polymer composition of the present embodiment is in a state before curing (polymerization reaction), and the thermally conductive polymer of the present embodiment is obtained by curing the thermally conductive polymer composition.

The liquid rubber may be, for example, a liquid rubber that has fluidity at room temperature and has two or more hydroxyl groups (-OH) in one molecule in its composition formula. In addition, it is preferable that the hydroxyl groups are located at the terminals of the molecule.

A part of the hydroxyl groups in such liquid rubber reacts with the functional groups of the curing agent and forms a chemical bond when the thermally conductive polymer composition described below is cured.

Specific examples of liquid rubbers having two or more hydroxyl groups in one molecule at the end include hydroxyl-containing polybutadiene, hydroxyl-containing polyisoprene, and hydroxyl-containing polyolefin. Among these, hydroxyl-containing polybutadiene is preferred because of its good fillability with fillers. These hydroxyl groups may be at the terminals of the molecules.

For example, if the liquid rubber is a hydroxyl group-containing polybutadiene, it may be Poly bd (Registered Trademark) series (hydroxyl group number: 0.83 to 1.83 mol/kg, manufactured by Idemitsu Kosan Co., Ltd.), G series (hydroxyl group number: 0.48 to 1.39 mol/kg, manufactured by Nippon Soda Co., Ltd., product name), or Krasol LBH series (hydroxyl group number: undisclosed, manufactured by TOTAL CRAY VALLEY Corp., product name). If the liquid rubber is a hydroxyl group-containing polyisoprene, it may be Poly ip (Registered Trademark) (hydroxyl group number: 0.83 mol/kg, manufactured by Idemitsu Kosan Co., Ltd.).

The number average molecular weight of the liquid rubber is not particularly limited, but may be, for example, in the range of 1000 to 3000, and more preferably in the range of 1500 to 3000. The hydroxyl value of the liquid rubber is preferably in the range of 0.5 to 2.0, and more preferably in the range of 0.5 to 1.8. The viscosity of the liquid rubber is not particularly limited, but may be, for example, in the range of 1.0 Pa·s to 1000 Pa·s, and more preferably in the range of 1.0 Pa·s to 900 Pa·s.

The solvent improves the plasticity of the thermally conductive polymer composition, and may be any solvent having one or more hydroxyl groups (-OH) in one molecule in the composition formula. The hydroxyl groups may be located at the terminals of the molecules.

The hydroxyl groups in such a solvent react with the functional groups of the curing agent to form chemical bonds when the thermally conductive polymer composition described below is cured.

The boiling point of the solvent is preferably 100°C or higher and 250°C or lower, and more preferably 120°C or higher and 230°C or lower. The viscosity of the solvent is preferably 500 mPa·s or lower (25°C), and more preferably 400 Pa·s or lower (25°C).

The solvent may be a polyhydric alcohol.

The solvent may be a solvent miscible with the liquid rubber. The term "solvent miscible with the liquid rubber" used herein refers to a liquid material in which the liquid rubber and the solvent are mixed in any ratio, and after being left to stand for 10 minutes or more, the mixture remains mixed to such an extent that no phase separation can be visually confirmed.

Specific examples of solvents having one or more hydroxyl groups in one molecule include n-butyl carbitol (diethylene glycol monobutyl ether), glycerin, polyethylene glycol monomethyl ether, butyl glycol, propylene glycol, ethylene glycol, and methyl tetraglycol.

The solvent contained in the conventional thermally conductive polymer composition is cured by volatilizing and removing the solvent, so the thermally conductive polymer after curing contains almost no solvent components. On the other hand, the solvent contained in the thermally conductive polymer composition of this embodiment is chemically bonded with the liquid rubber by the curing agent during curing, and becomes a part of the thermally conductive polymer. In other words, the thermally conductive polymer has a solvent-curing agent-liquid rubber bond. In addition, since the curing agent bonds with other solvents and with other liquid polymers, it also has a solvent-curing agent-solvent or liquid rubber-curing agent-liquid rubber bond. Furthermore, if the curing agent is a multifunctional type, it is even more desirable because it will have many bonds between the solvent and the liquid polymer via the curing agent.

For the above reasons, it is not necessary to use a low-boiling solvent with high volatility, and a solvent with a wide range of boiling points, from low-boiling solvents to high-boiling solvents, can be used according to the application. In particular, a medium-boiling solvent or a high-boiling solvent is preferred from the viewpoint of ease of application of the thermally conductive polymer composition. Specifically, the boiling point of the solvent is preferably 100°C or higher, more preferably 150°C or higher, and even more preferably 180°C or higher.

The appropriate content ratio of the solvent to the liquid rubber may be, for example, in the range of 5 parts by mass or more and 600 parts by mass or less per 100 parts by mass of the liquid rubber. By setting the content ratio of the solvent to the liquid rubber in this range, the liquidity is ensured during application of the thermally conductive polymer composition, workability is improved, and the curing of the liquid rubber component is prevented from being inhibited. The appropriate ratio of the solvent to the liquid rubber is more preferably in the range of 5 parts by mass or more and 100 parts by mass or less per 100 parts by mass of the liquid rubber.

The curing agent may have two or more functional groups in one molecule that can react with both the hydroxyl groups of the liquid rubber and the hydroxyl groups in the solvent molecule. The curing agent of this embodiment may be one that chemically bonds with both the hydroxyl groups of the liquid rubber and the hydroxyl groups of the solvent. It is preferable that the multiple hydroxyl groups of the liquid rubber are located at the terminals of the molecule.

Specific examples of the curing agent having two or more functional groups reactive with a hydroxyl group in one molecule include an isocyanate compound, an acid anhydride, a carboxylic acid, and an amine.

The method for curing the thermally conductive polymer composition using such a curing agent is not particularly limited, but examples thereof include a curing method in which a polymerization reaction proceeds when left at room temperature, and a method in which the reaction rate is increased by heating to promote curing.

The appropriate content ratio of the curing agent to the liquid rubber may be, for example, in the range of 50 parts by mass to 400 parts by mass per 100 parts by mass of the liquid rubber. By setting the content ratio of the curing agent to the liquid rubber in this range, the hydroxyl groups of the liquid rubber and the hydroxyl groups of the solvent can be sufficiently polymerized to form a thermally conductive polymer with an appropriate hardness, and it is possible to prevent the hardness from becoming excessive and increasing brittleness.

The content ratio of the hardener to the liquid rubber is more preferably 50 parts by mass to 360 parts by mass to 100 parts by mass of the liquid rubber, and even more preferably 90 parts by mass to 200 parts by mass to 100 parts by mass of the liquid rubber.

The filler enhances the thermal conductivity of the thermally conductive polymer after curing, and is preferably thermally conductive. For example, it is preferable to use a filler having a thermal conductivity of 10 W/(m-K) or more.

Examples of the filler include metals, metal oxides, metal hydroxides, metal nitrides, and carbon. Metals include gold (319), silver (428), copper (403), aluminum (236), tungsten (177), titanium (22), nickel (94), iron (84), and alloys using two or more of these metals. The numbers in parentheses for the above metals are examples of thermal conductivity expressed in units of W/(m·K). The thermal conductivity of these metals is 10 W/(m-K) or more.

Examples of metal oxides of the filler include aluminum oxide (20-35), magnesium oxide (45-60), beryllium oxide (272), zinc oxide (54), silicon oxide (2), and titanium oxide (8). Examples of metal hydroxides include aluminum hydroxide. Examples of metal nitrides include aluminum nitride (150-250), boron nitride (30-50), and silicon nitride (20-90). The numerical values in parentheses for the oxides above are examples of thermal conductivity expressed in units of W/(m-K).

Examples of carbon include graphite (100), carbon fiber (94-149), fullerene (C60: 0.4), graphene (3000-5300), and carbon nanotubes (multi-layer: 650-830). The values in parentheses for carbon are examples of thermal conductivity expressed in units of W/(m·K).

Among these, aluminum oxide is particularly preferred as a constituent material of the filler because it is inexpensive and easily available. Furthermore, among these metal oxides, metal hydroxides, and carbon, the thermal conductivity of the materials other than silicon oxide, titanium oxide, and fullerene is 10 W/(m-K) or more. The thermal conductivity of the materials other than fullerene is 2 W/(m·K) or more.

The filler preferably contains one or more of the example materials described above, more preferably contains one or more of metal oxides, metal hydroxides, and metal nitrides, and particularly preferably contains aluminum oxide.

The shape of the filler may be particulate, and from the viewpoint of imparting excellent shape conformity and high thermal conductivity after curing to the thermally conductive elastomer composition, it is preferable to use spherical particles, disk-shaped particles, or rounded particles with few corners (rounded particles).

The particle size distribution of the filler may have multiple peaks from the viewpoint of ensuring both filling property and processability. Therefore, the filler may contain multiple types of filler particles with different average particle diameters (d50) (analysis method: laser diffraction scattering type particle size distribution measurement, measurement device: particle size distribution measurement device Microtrac MT3300EX II), measurement conditions: US dispersion with sodium hexametaphosphate for 1 minute). When the filler contains two types of filler particles with different average particle diameters (d50), for example, it is preferable that the peak on the small particle side is in the range of 0.3 µm to 10 µm, and the peak on the large particle side is in the range of 20 µm to 100 µm.

In addition to the above-mentioned liquid rubber, solvent, curing agent, and filler, the thermally conductive polymer composition of the present embodiment may further contain a lubricant, an antioxidant, a flame retardant, a tackifier, etc. For example, by further adding a flame retardant, the composition can be used as a flame-retardant heat transfer member between a battery cell and an exterior case (heat sink) of a lithium-ion secondary battery.

The thermally conductive polymer of this embodiment, which is obtained by curing the thermally conductive polymer composition having the above-mentioned configuration, is obtained by curing the thermally conductive polymer composition by polymerization reaction. The thermally conductive polymer of this embodiment has a compression modulus of 4.5 N/mm² or more and 5.5 N/mm² or less at room temperature (25°C). It is more preferable that the compression modulus of the thermally conductive polymer at room temperature (25°C) is 4.7 N/mm² or more and 5.3 N/mm² or less. In addition, it is preferable that the thermal conductivity of the thermally conductive polymer is 1.5 W/(m·K) or more. The compression modulus of the thermally conductive polymer at room temperature (25°C) can be measured using the method described in the examples below. By having the compression modulus within the above-mentioned range, it is possible to improve the shape conformity. If the compression modulus is less than 4.5 N/mm², the adhesion is insufficient, and if it is more than 5.5 N/mm², the material is too hard and difficult to eject and apply.

The thermally conductive polymer of this embodiment focuses on the amount of urethane bonds derived from the liquid rubber of the thermally conductive polymer composition, and increases this amount of urethane bonds after curing. As a result, the thermally conductive polymer has a compression modulus within the above-mentioned range, and the adhesion in a high-temperature environment and after being left in a high-temperature environment for a long period of time is improved.

Conventionally, when the amount of liquid rubber or curing agent in a thermally conductive polymer composition is small, the liquid rubber does not easily form a network of urethane bonds. However, by using a thermally conductive polymer composition in which the amount of liquid rubber or curing agent is increased as in the present embodiment, a network of urethane bonds is formed after the liquid rubber hardens. This improves strength and suppresses cohesive failure, resulting in a thermally conductive polymer with improved adhesion.

The thermally conductive polymer of this embodiment may have a urethane bond amount derived from the liquid rubber described above of 0.17 mol/2000 cc or more, preferably 0.20 mol/2000 cc or more. If the urethane bond amount is equal to or more than this value, a sufficient network of urethane bonds is formed when the thermally conductive polymer composition is cured, and the strength of the thermally conductive polymer and its adhesion to the member to which it is applied can be improved. The urethane bond amount of the thermally conductive polymer can be calculated by the method described in the examples below.

The thermally conductive polymer of this embodiment has, for example, a terminal group of -[(C₂H₄-O)ₘ -Cₙ H₂ₙ₊₁] (where m and n are any natural numbers). The thermal conductivity of such a thermally conductive polymer measured by a steady-state method is, for example, in the range of 1.5 W/(m·K) or more and 5 W/(m·K) or less.

### (Thermal Conductive Polymer Composition Forming Materials)

The material for forming the thermally conductive polymer composition for forming the thermally conductive polymer composition of the present embodiment is a two-liquid mixed type thermally conductive polymer material, and has the liquid A containing the above-mentioned liquid rubber and solvent, and the liquid B containing a curing agent. At least one or both of the liquid A and the liquid B further contain a filler.

In addition, the densities of the liquid A and the liquid B are approximately the same as long as the filler loading amount is up to 2,000 parts by mass when the total amount of the liquid rubber and the solvent is 100 parts by mass, or the total amount of the curing agent and the flame retardant is 100 parts by mass.

When the material for forming the thermally conductive polymer composition of this embodiment is used, it is cured by mixing liquid A and liquid B, whereby the hydroxyl groups of the liquid rubber in liquid A and the hydroxyl groups of the solvent come into contact with the curing agent contained in the liquid B and form a chemical bond. As an application method, for example, a method can be used in which equal volumes of the liquid A and the liquid B are dispensed using a dispenser for mixing two liquids, and then mixed to form a thermally conductive polymer composition, which can then be directly applied to the surface of a member on which the thermally conductive polymer is to be provided.

In this manner, according to the material for forming the thermally conductive polymer composition of the present embodiment, by separating the liquid A containing the liquid rubber and the solvent from the liquid B containing the curing agent, the liquid A and the liquid B can be mixed at any desired timing to harden them to form a thermally conductive polymer, and a material for forming the thermally conductive polymer composition with excellent storage stability can be realized.

Although one embodiment of the present invention has been described above, this embodiment is presented as an example and is not intended to limit the scope of the invention. This embodiment can be implemented in various other forms, and various omissions, substitutions, and modifications can be made without departing from the gist of the invention. This embodiment and its modifications are included in the scope of the invention and its equivalents described in the claims, as well as in the scope and gist of the invention.

### EXAMPLES

Equal volumes of the liquid A and the liquid B of the material for forming the thermally conductive polymer compositions for each sample having the composition shown in Table 1 were mixed and allowed to stand in an atmosphere at 25°C for 24 hours or more to cure, thereby obtaining the thermally conductive polymers of Examples (Ex.) 1 to 6 of the present invention and Comparative Examples (C.Ex.) 1 to 5. The amount of urethane bond derived from the liquid rubber of each thermally conductive polymer, the compressive elastic modulus at 25°C, and the adhesion at 25°C and 50°C were then examined.

Table 1 shows the compositions of the liquid A and the liquid B, as well as the urethane bond amount, compression modulus, and adhesion of the resulting thermally conductive polymer.

The details of each component are as follows:

### [Liquid rubber]

Hydroxyl-terminated polybutadiene: Poly bd (Registered Trademark) series (manufactured by Idemitsu Kosan Co., Ltd.) [solvent]
n-Butyl carbitol: (manufactured by Tokyo Chemical Industry Co., Ltd.) [Filler]
3 Dispersion particle size alumina: DAB series (product name, manufactured by Denka Co., Ltd.)

### [Curing agent]

Multifunctional isocyanate: Millionate MR series (product name, manufactured by Tosoh Corporation)

### [Flame retardant]

Phosphorus-based flame retardant: TCP (product name, manufactured by Daihachi Chemical Industry Co., Ltd.)

### (Method of calculating the amount of urethane bond derived from liquid rubber)

It is assumed that a thermally conductive polymer composition was prepared by discharging 1000 cc of liquid A and 1000 cc of liquid B. The amount of urethane bonds derived from the liquid rubber was calculated based on the amount of hydroxyl groups in the liquid rubber, the amount of hydroxyl groups in the solvent, and the molar amount of functional groups in the curing agent that perform chemical bonds, assuming that the functional groups of the curing agent react preferentially with the hydroxyl groups in the solvent.

For example, the amount of urethane bonds derived from the liquid rubber was calculated based on assumption that the density of both liquids A and B was 3.3 g/cm³, the amount of hydroxyl groups in the liquid rubber (Poly bd) was 1.83 mol/kg, the amount of hydroxyl groups in the solvent (n-butyl carbitol) was 6.17 mol/kg, and the amount of isocyanate in the curing agent (MR) was 7.62 mol/kg.

### (Method of measuring compressive elastic modulus)

For the compression test, the thermally conductive polymer composition of each sample was left to stand in the atmosphere at 25°C for 24 hours or more to cure the thermally conductive polymer, which was then molded to a diameter of 28 mm and a thickness of 2 mm, and the sample was compressed using a tensile tester (product name: AGS-X, manufactured by Shimadzu Corporation). The displacement and test force were measured until the test force reached 1000 N, and the elastic modulus was calculated in the range of test forces of 10-20 N. The test environment was 25°C.

### (Method for measuring adhesion at 25°C and 50°C)

As shown in Fig. 1, the tensile test was carried out by preparing two aluminum rods, and forming a thermally conductive polymer of each sample, which was cured by leaving the thermally conductive polymer composition of each sample in the atmosphere at 25°C for 24 hours or more, into a rectangle of 25 mm length x 19 mm width x 1 mm thickness, and overlapping the other aluminum rod to bond it. Then, using a tensile tester (product name: AGS-X: manufactured by Shimadzu Corporation), the sample was pulled from above and below as shown in Fig. 1B to measure the adhesive strength and elongation, and the maximum stress of each sample was calculated based on the results. The test environment was 25°C and 50°C.

**[Table 1]**

| | | Ex. 1 | Ex. 2 | Ex. 3 | Ex. 4 | Ex. 5 | Ex. 6 | C.Ex. 1 | C.Ex. 2 | C.Ex. 3 | C.Ex. 4 | C.Ex. 5 |
|---|---|---|---|---|---|---|---|---|---|---|---|---|
| Liquid A | Liquid Rubber | 50 | 60 | 70 | 80 | 90 | 95 | 40 | 60 | 40 | 40 | 100 |
| | Solvent | 50 | 40 | 30 | 20 | 10 | 5 | 60 | 40 | 60 | 60 | 0 |
| | Filler | 1700 | 1700 | 1700 | 1700 | 1700 | 1700 | 1700 | 1700 | 1700 | 1700 | 1700 |
| Liquid B | Curing Agent | 50 | 50 | 50 | 50 | 50 | 50 | 20 | 20 | 30 | 50 | 50 |
| | Flame Retardant | 50 | 50 | 50 | 50 | 50 | 50 | 80 | 80 | 70 | 50 | 50 |
| | Filler | 900 | 900 | 900 | 900 | 900 | 900 | 900 | 900 | 900 | 900 | 900 |
| Thermally Conductive Polymer (Cured Product, Volume Mixture of Liquid A + Liquid B etc.) | Amount of Liquid Rubber-Derived Urethane Bond (mol/2000 cc) | 0.17 | 0.20 | 0.23 | 0.27 | 0.30 | 0.32 | 0.00 | 0.05 | 0.08 | 0.13 | 0.34 |
| | Compression Modulus (N/mm²) | 4.5 | 4.6 | 5.0 | 5.2 | 5.4 | 5.5 | 2.1 | 3.0 | 3.1 | 4.4 | Not castable due to high hardness |
| | Adhesion at 50°C (MPa) | 0.026 | 0.041 | 0.073 | 0.071 | 0.072 | 0.082 | 0.013 | 0.02 | 0.02 | 0.021 | Cannot be evaluated |
| | Adhesion at 25°C (MPa) | 0.08 | 0.19 | 0.09 | 0.11 | 0.13 | 0.12 | 0.018 | 0.026 | 0.025 | 0.057 | Cannot be evaluated |

According to the results shown in Table 1, if the compression modulus of elasticity of the thermally conductive polymer at room temperature (25°C) is 4.5 N/mm² or more and 5.5 N/mm² or less, the adhesion at 25°C can be made 0.08 MPa or more, and the adhesion at 50°C can be made 0.026 MPa. This confirmed that it is possible to realize a thermally conductive polymer with excellent shape conformity that can conform to the surface shape of a component and adhere with almost no gaps.

Furthermore, in Examples 1 to 6 of the present invention, in which the amount of urethane bond derived from the liquid rubber was 0.17 mol/2000 cc or more and 0.32 mol/2000 cc or less, the adhesion at 25°C was 0.08 MPa or more, and the adhesion at 50°C was 0.026 MPa . In particular, in Examples 3 to 6 of the present invention, in which the compression modulus of the thermally conductive polymer at room temperature (25°C) was 5.0 N/mm² or more, the adhesion at 50°C was excellent, being 0.071 MPa or more.

## Claims

1. A thermally conductive polymer composition comprising:
a liquid rubber having two or more hydroxyl groups in one molecule;
a solvent having one or more hydroxyl groups per molecule;
a curing agent having two or more functional groups capable of reacting with both the hydroxyl groups of the liquid rubber and the hydroxyl groups of the solvent in one molecule; and
a filler, wherein
a compression modulus of a cured thermally conductive polymer at room temperature is 4.5N/mm² or more and 5.5N/mm² or less, the cured thermally conductive polymer being obtained after mixing the thermally conductive polymer composition and then allowing the thermally conductive polymer composition that is mixed to stand in an atmosphere at 25°C for 24 hours or more.

2. The thermally conductive polymer composition according to Claim 1, wherein the filler has a thermal conductivity of 10 W/(m-K) or more.

3. The thermally conductive polymer composition according to Claim 1 or 2, wherein the liquid rubber comprises at least one of polybutadiene, polyisoprene, and polyolefin having a plurality of hydroxyl groups.

4. The thermally conductive polymer composition according to any one of Claims 1 to 3, wherein the solvent comprises at least one of ethylene glycol, n-butyl carbitol, glycerin, polyethylene glycol monomethyl ether, butyl glycol, propylene glycol, ethylene glycol, and methyl tetraglycol.

5. The thermally conductive polymer composition according to any one of Claims 1 to 4, wherein the curing agent is an isocyanate compound.

6. The thermally conductive polymer composition according to any one of Claims 1 to 5, further comprising a tackifier.

7. A material for forming the thermally conductive polymer composition according to any one of Clams 1 to 6, comprising:
a liquid A containing the liquid rubber and the solvent; and
a liquid B containing the curing agent, wherein
at least one of the liquid A and the liquid B further contain the filler.

8. A thermally conductive polymer obtained by curing the thermally conductive polymer composition according to any one of Claims 1 to 6, wherein
the thermally conductive polymer includes 0.17 mol/2000 cc or more of a urethane bond derived from the liquid rubber.

9. The thermally conductive polymer according to claim 8, wherein a terminal group of the thermally conductive polymer is -[(C₂H₄-O)ₘ-CₙH₂ₙ₊₁], m and n being any natural number.

10. The thermally conductive polymer according to claim 8 or 9, wherein a thermal conductivity of the thermally conductive polymer is 1.5 W/(m·K) or more.
